# EUROPEAN PATENT APPLICATION

(11) **EP 4 485 252 A1**
(43) Date of publication of application: **01.01.2025**
(21) Application number: 24179269.6
(22) Date of filing: 31.05.2024
(51) Int. Cl.: G06F 21/57, G06F 21/64, G06N 20/00, H04L 9/32

(54) **SECURE DATA HANDLING**

(30) Priority: 26.06.2023 FI 20235739
(71) Applicant: Nokia Solutions and Networks Oy, 02610 Espoo (FI)
(72) Inventor: AKKUS, Istemi Ekin, Stuttgart (DE); CHEN, Ruichuan, Marbach (DE); RIMAC, Ivica, Remseck (DE)
(74) Representative: Nokia EPO representatives

(57) **Abstract**

According to an example aspect of the present invention, there is provided an apparatus configured to determine, using a first executable program and in a trusted execution environment of the apparatus, at least one characteristic of a data item, obtain, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and provide at least one of the data item or the cryptographic signature to a node.

## Description

### FIELD

The present disclosure relates to dependable handling of data, such as, for example, training data for machine learning solutions.

### BACKGROUND

Machine learning solutions, such as artificial neural networks, may be trained before being applied to live use. Training machine learning solutions may be based on training data, which may comprise fairly large datasets. The quality of the training data affects the quality of the resulting trained machine learning solution and its outputs, such as classifying decisions.

To increase the quality of machine learning solutions, training data may be generated using a staged or simulated environment. Alternatively or in addition, training data may be obtained from plural sources, such as sensors or sensor arrays, to help diversify the training process. Also outside of machine learning, data sets may be compiled from diverse sources for various uses.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to determine, using a first executable program and in a trusted execution environment of the apparatus, at least one characteristic of a data item, obtain, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and provide at least one of the data item or the cryptographic signature to a node.

According to a second aspect of the present disclosure, there is provided an apparatus comprising at least one processing core and at least one memory storing instructions that, when executed by the at least one processing core, cause the apparatus at least to receive a data item and a cryptographic signature, verify the cryptographic signature using a public key of a trusted execution environment of a node, and responsive to the verification of the cryptographic signature being successful, use the data item in a process in the apparatus, and responsive to the verification of the cryptographic signature being successful, not use the data item in the process.

According to a third aspect of the present disclosure, there is provided a method comprising determining, in an apparatus, using a first executable program and in a trusted execution environment of the apparatus, at least one characteristic of a data item, obtaining, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and providing at least one of the data item or the cryptographic signature to a node.

According to a fourth aspect of the present disclosure, there is provided a method, comprising receiving a data item and a cryptographic signature, verifying the cryptographic signature using a public key of a trusted execution environment of a node, and responsive to the verification of the cryptographic signature being successful, using the data item in a process in the apparatus, and responsive to the verification of the cryptographic signature being successful, not using the data item in the process.

According to a fifth aspect of the present disclosure, there is provided an apparatus comprising means for determining, in an apparatus, using a first executable program and in a trusted execution environment of the apparatus, at least one characteristic of a data item, obtaining, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and providing at least one of the data item or the cryptographic signature to a node.

According to a sixth aspect of the present disclosure, there is provided an apparatus comprising means for receiving a data item and a cryptographic signature from a node, verifying the cryptographic signature using a public key of a trusted execution environment of the node, and responsive to the verification of the cryptographic signature being successful, using the data item in a process in the apparatus, and responsive to the verification of the cryptographic signature being successful, not using the data item in the process.

According to a seventh aspect of the present disclosure, there is provided a non-transitory computer readable medium having stored thereon a set of computer readable instructions that, when executed by at least one processor, cause an apparatus to at least determine, using a first executable program and in a trusted execution environment of the apparatus, at least one characteristic of a data item, obtain, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and provide at least one of the data item or the cryptographic signature to a node.

According to an eighth aspect of the present disclosure, there is provided a non-transitory computer readable medium having stored thereon a set of computer readable instructions that, when executed by at least one processor, cause an apparatus to at least receive a data item and a cryptographic signature, verify the cryptographic signature using a public key of a trusted execution environment of a node, and responsive to the verification of the cryptographic signature being successful, use the data item in a process in the apparatus, and responsive to the verification of the cryptographic signature being successful, not use the data item in the process.

### BRIEF DESCRIPTION OF THE DRAWINGS

FIGURE 1 illustrates an example system in accordance with at least some embodiments of the present invention;
FIGURE 2A illustrates a first example of signature generation;
FIGURE 2B illustrates a second example of signature generation;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

To enhance quality of computation processes based on data sets, data sets may be characterized in terms of their characteristics. Such characteristics may be determined in a trusted execution environment, TEE, and the TEE may cryptographically sign the data set, or a hash value obtained using the data set as input. The signature may then be provided to a data user node which intends to use the data set, as proof that the data set has a desired characteristic, or characteristics. In case the TEE determines the data set doesn't have the desired characteristic(s), it may abstain from the signing. Alternatively the TEE may be configured to sign a set of indications of data set characteristics it determined the data set to have. This provides the benefit, that e.g. machine learning is not run on training data which is does not actually conform to the phenomenon the machine learning solution is being trained to respond. Thus a beneficial effect is obtained in that the machine learning solution will provide output, such as classification decisions or driving control inputs, of a higher quality. More generally the quality of output of a computation process is enhanced when the quality of its input is enhanced.

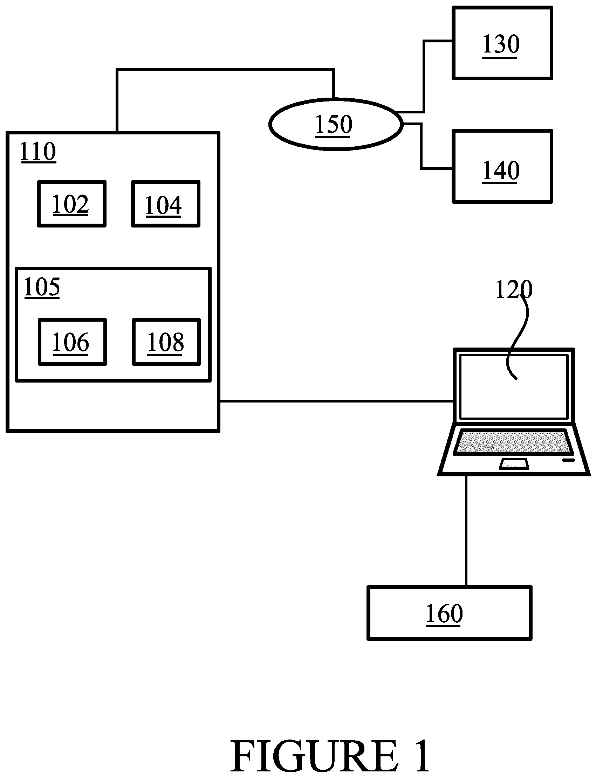

FIGURE 1 illustrates an example system in accordance with at least some embodiments of the present invention. The system comprises a data user 120, which is configured to employ data sets, each data set comprising at least one data item, in a computation process. The computation process may comprise training of a machine learning solution, such as, for example, an artificial neural network, such as a convolutional, deep stacking, radial basis function or recurrent artificial neural network, for example. Alternatively the computation process may be a big data process, such as a data mining process or a simulation process which takes at least one data item as input.

Data user 120 obtains the data sets, or at least one data set, from data sources 130, 140. Although two data sources are illustrated in FIGURE 1, other embodiments have a single data source, or more than two data sources 130, 140. The computation process in data user 120 may be vulnerable to variation in the quality of the data sets it uses in the computation process. For example, a malicious party may modify data in data sources 130, 140, or a data source may itself be a malicious party. Thus, for example, in case the computation process is a training process of a machine learning solution and the data set(s) is, or are, training data to be used in the training process, the training process may be attacked by providing, or causing to be provided, data of an incorrect type. For example in case the training process aims to train an artificial neural network to recognize pedestrians in a vehicular dashboard video stream, a malicious party might provide a recording of a basketball match to data user 120 instead of correct training data. The neural network would then be sub-optimally trained, which might increase risk of a traffic accident in case the neural network is used in a self-driving car, or in case the neural network is used to alert a human driver of pedestrians ahead. Data sources 130, 140 may provide indications of their data, and at least one characteristic of their data, to potential data users. For example, data sources 130, 140 may publish these indications in a list which may be subscribed to by data users.

To guard against such quality degradation in the computation process, data user 120 may take steps to increase confidence in the data sets being of a correct type. In detail, data user 120 may take steps to increase confidence, that the data set(s) have at least one characteristic that makes them usable in the computation process. In the example case of the pedestrian recognition training process mentioned above, these characteristics may include that the data is of an image, numerical or video type, that there is a road visible in individual image frames, and optionally that the individual image frames share similar features, such as a frame of a windscreen, indicating that the data is of a dashboard type. In case the data set is determined to have these characteristics it is with a higher confidence of a correct type for the training process. Examples of numerical data include a time series of measurement results and numerical outputs of simulation processes. Likewise in other computation processes the data set, or data sets, of a correct type have specific characteristics, which characterize the computation process, which increase confidence that the data is of a correct type, and then increase the dependability of outputs of the computation process. Another example of data characteristics is medical data, where desired data set characteristics include, for example, that subjects therein are less than three metres tall, and of an age of less than 120 years.

Further characteristics which may be determined include, for numerical data, statistical features of the numerical data. Likewise for numerical data, sampling errors may be detected as it is a characteristic of the data if the data is presented with a 16-bit accuracy, for example. Yet further, non-repetition of the same sequence in numerical, textual or image data may be determined.

Data user 120 might be configured to determine the characteristics of the data set itself, however this is not always desirable since the data set, or sets, may be large, and furthermore there may be a large number of potential data sources 130, 140 with a corresponding large number of potential data sets to choose from. To address this, the system of FIGURE 1 comprises verifier 110, which is an apparatus comprising a processing core 102 and memory 104. Processing core 102 and memory 104 may be general-purpose computing and storage devices, respectively, configured to control the functioning of verifier 110 as a general-purpose computer or computing device. Data sources 130, 140 may be configured to provide their data sets to verifier 110 via network 150, for example. Network 150 may comprise the Internet or a cellular communication network, for example.

Verifier 110 further comprises a trusted execution environment, TEE, 105. Examples of trusted execution environments include Secure Guard Extensions, SGX, from Intel corporation and TrustZone from ARM corporation. TEE 105 comprises a processing core 106 and memory 108, which are not accessible from processing core 102. In detail, in some embodiments a hardware configuration prevents access of processing core 102 to memory region 108. In physical terms, processing core 106 may be a subsection of physical processing core 102, or a separate set of instructions of processing core 102. Likewise, memory 108 may be a distinct physical memory, only accessible by processing core 106, or a region in memory 104, which is not accessible by processing core 102, and only accessible by processing core 106 or the set of instructions which constitute processing core 106. Data source 130/140 may be configured to provide the data set to TEE 105 in an encrypted form, for example by using a public key of the TEE 105 to encrypt the data set. The public and private keys of TEE 105 may be ephemeral, in other words, generated responsive to a need to use it. An advantage of such an ephemeral key is that less time is available to attackers to compromise the key. An ephemeral key may be signed, or provided in a signed certificate, enabling the verification of its origin using a chain of trust.

TEE 105 is capable of performing computing processes in a secured manner, isolated from general purpose processing, such as that of processing core 102. In detail, TEE 105 is configured to determine, using an executable program, in TEE 105, at least one characteristic of a data set. If a data set comprises a single data entry, it may be referred to as a data item, however in a general case a data set comprises plural data items. TEE 105 may decrypt the data set before processing it.

TEE 105 may be provided a set of one or more characteristic the data set should have. The set of characteristics may be received in verifier 110 from data user 120, for example. In some embodiments TEE 105 is configured to receive the a set of one or more characteristic the data set should have using a secured, encrypted protocol connection from data user 120, such that processing core 102 of verifier 110 cannot access the set of one or more characteristics. TEE 105 and data user 120 are endpoints of such a protocol connection. In case the data set has the at least one desired characteristic of the set, TEE 105 may cryptographically sign the data set and a hash of the executable program used to determine the characteristic(s) of the data set. Alternatively to including the data set itself in the input to the signature algorithm, a hash of the data set may be included in the input to the signature algorithm. In other words, TEE 105 may be configured to sign the data set, or its hash, along with a hash of the executable program responsive to determining that the data set has the characteristic(s) provided by data user 120.

Alternatively to cryptographically signing the data set, or its hash, only in case it has the characteristic(s) defined by data user 120, TEE 105 may be configured to always sign the data set, or its hash, and also include in the inputs to the signature algorithm indications of characteristics TEE 105 has determined to be present in the data set. Also the indication(s) themselves are provided with the data set, for example to data user 120. In this case, data user 120 may selectively only use those data sets which have been determined to have the characteristics which make the data sets usable for the computation process data user 120 is configured to perform. Also in these cases, the hash of the executable program may be included in the inputs provided to the signature algorithm. Further in these cases, data user 120 need not provide to TEE 105 the set of desired at least one characteristic it wants a data set to have. For example, TEE 105 may access a table mapping data set characteristics to indications, and TEE 105 may select the indication(s) to include in the scope of the signature based on the mapping and the determined characteristic(s).

Once the determination of the data set characteristic(s) and the cryptographic signing are complete, data user 120 may receive the data set and cryptographic signature, either directly from TEE 105 or verifier 110, or from an intermediate data set repository where data sets and their associated signatures may be stored. Data user 120 may verify the correctness of the signature using the signed data and/or hashes, and reference to a trusted party 160. For example, a public key of TEE 105 may be used to verify the signature in case a corresponding private key is used in TEE 105 to apply the signature. The public key may be freely distributed and it may be provided with a signature of trusted party 160, which may be a manufacturer of TEE 105, for example. The manufacturer may create a public-private key pair when manufacturing TEE 105 and securely store the private key in TEE 105. The signature of trusted party 160 on the public key effectively ensures, that the signature has been created using the correct private key of TEE 105. Since TEE 105 can securely store data in memory 108, the private key may be kept there.

Responsive to the cryptographic signature on the data set, or its hash, being verified as correct, data user 120 may be configured to use the data set in the computation process. In case TEE 105 includes the indication(s) of the characteristics of the data set in the scope of its signature, these indications are also provided to data user 120. In these cases, data user 120 will check that the indications indicate that the data set has the correct characteristic(s) for the computation process, otherwise it is not even necessary to verify the cryptographic signature of TEE 105.

As the cryptographic signature of TEE 105 is run also over the hash of the executable program used to determine the data set characteristic(s), data user 120 may also be confident concerning a software version of the executable program, which further increases the dependability of the data set and, by extension the dependability of the computation process and its results. With progressing versions of the executable program, the program may be configured with an expanding list of characteristics it is capable of determining in a data set. By verifying the version using the hash, data user 120 may be confident that the version used was indeed capable of identifying the indicated characteristic(s), further enhancing credibility of the data set. In some embodiments, the executable program is used together with an interpretable-language element, in which case the hash may be computed over both the executable program and the interpretable-language element. The data user 120 may recreate the hash of the executable program by having access to the program code, data user 120 may trust the assessment of another party that has access to the executable program and is trusted by the data user, or the assessment of an automated program that has access to the executable program and can determine its capabilities regarding the desired characteristics in a data set, for example.

In some embodiments, TEE 105 is configured to perform the determination of the at least one characteristic of the data set by using, in the executable program, a machine learning solution to classify the data item. This is a versatile solution as machine-learning solutions are effective in classifying data of different types, and the aim overall is to discover, whether the data set is of a suitable type for the computation process in data user 120. Therefore in some embodiments, a machine learning solution, such as an artificial neural network, is used in TEE 105 to determine at least one characteristic of the data set, and the data set may then subsequently be used in data user 120, provided the at least one characteristic is correct for training a second machine learning solution, to train a second machine learning solution, such as, for example, a second artificial neural network.

In case data user 120 runs a machine learning training process, data user 120 may be configured to run the trained machine learning solution once the training process is complete. Alternatively, data user 120 may be configured to provide the trained machine learning solution, for example by providing trained coefficients of the machine learning solution, to a further node which is configured to run the machine learning solution.

A machine learning solution in data user 120, or in the further node configured to run the machine learning solution, may comprise one of the following: a trash item classification process, a pedestrian recognition process and an autonomous vehicle navigation process. A trash item classification process may comprise separating, based on video input, recyclable bottles from non-recyclable bottles, or biodegradable items from non-biodegradable items.

In some embodiments, federated learning, FL, is used. FL is a machine learning technique for training an algorithm collaboratively between multiple entities, in which multiple entities, such as devices or servers, each hold a part of the training data but do not exchange said training data among each other. In other words, FL enables collaborative learning among multiple data owners without exchanging the data. In this setting, the model may be sent to data owners, who compute their local updates and send them back to the model owner. Techniques for securely exchanging model updates include secure multi-party computing, homomorphic encryption and secure aggregation. FL has been used both to avoid large data transfers between edge devices and the cloud, and to protect the privacy of the training data. FL is thus well suited to the current disclosure, since plural data sources 130, 140 may keep their training data sets private from each other.

In some embodiments, a data set originating in a data source may be in the form of a continuous data stream, in which case TEE 105 may be configured to sample it on a continuous basis, for example periodically with a constant time period between samples. In case the characteristic(s) of the data set stream change from earlier samples, TEE 105 may inform data user 120 of this. TEE 105 may also be configured to indicate to data user 120 in case no change in characteristic(s) is detected. For example, TEE 105 may be configured to determine the characteristics of every second, every third, every tenth or every fiftieth image frame in a video stream.

A benefit of verifier 110 determining the characteristic(s) of the data set, rather than data sources 130, 140 providing these characteristics themselves, is that a case is guarded against where a malicious data source would mis-characterise its own data set to compromise the computation process in data user 120. Data sources 130, 140 may publish or advertise the determined characteristics of their data sets after one or more verifier has determined these characteristics. Plural verifiers may be needed in case there is no single verifier which is configured to determine all the relevant characteristics of a specific data set.

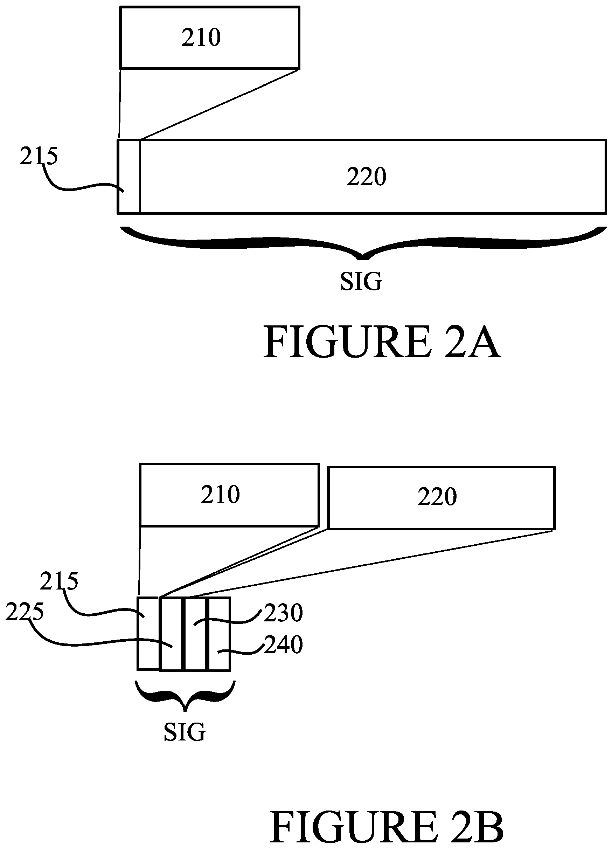

FIGURE 2A illustrates a first example of signature generation. The first executable program 210 is hashed to produce, using a suitable hash function, which is a one-way function, a hash value 215. Cryptographic signature SIG is then obtained using as input to a cryptographic signature algorithm the hash 215 and data set 220. First executable program 210 is used in TEE 105 to determine the characteristic(s) of the data set.

FIGURE 2B illustrates a second example of signature generation. Here 210 and 215 correspond to the first executable program and its hash value, as in FIGURE 2A. Further, 220 corresponds to the data set, as in FIGURE 2A. Further, hash value 225 is obtained from data set 220, and indications of characteristics of data set 220 are likewise included in the inputs to the cryptographic signature algorithm to obtain signature SIG. The cryptographic signature thus attests that executable program 210 was used to determine that data set 220 has characteristic(s) indicated by indications 230, 240.

In some embodiments, the cryptographic signature is run over the executable program itself, rather than its hash. This may be the case either in the embodiments of FIGURE 2A or FIGURE 2B, although using the hash in this regard is beneficial in terms of reduced computation needed to sign the hash, which is substantially shorter than the executable program itself.

In the case of FIGURE 2A, the cryptographic signature and/or data set 220 may be provided from TEE 105 to data user 120, or to a storage repository. In the case of FIGURE 2B, the cryptographic signature and indications 230, 240 may be provided from TEE 105 to data user 120, or to a storage repository. Further in the case of FIGURE 2B, also the data set 220 may be so provided together with the cryptographic signature and indications 230, 240. In some cases only the signature and, in the case of FIGURE 2B, the indications 230, 240 are provided to data user 120 or the storage repository, leaving to data user 120 to request data set 220 from data source(s) 130, 140 or the repository.

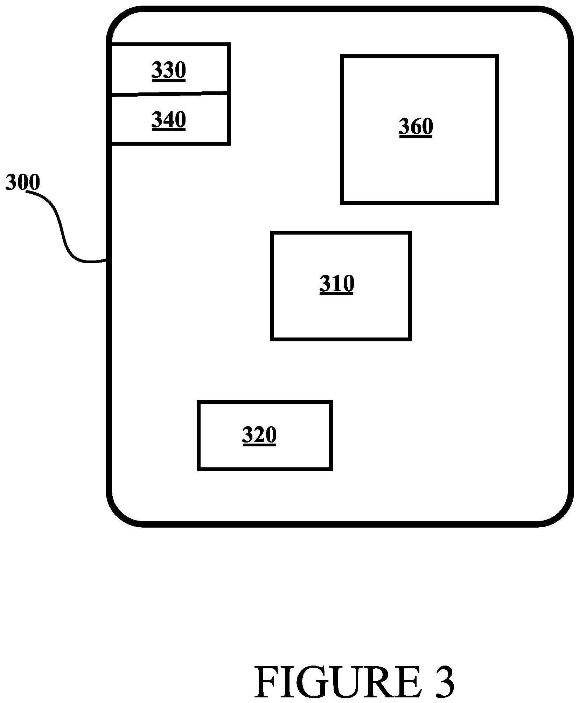

FIGURE 3 illustrates an example apparatus capable of supporting at least some embodiments of the present invention. Illustrated is device 300, which may comprise, for example, a verifier 110 or data user 120 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as determining, obtaining, providing, receiving, verifying and using. Processor 310 may be configured, at least in part by computer instructions, to perform actions. As described above, in case device 300 corresponds to the verifier, it further comprises a TEE, as illustrated in FIGURE 1.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure data set management parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340, and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

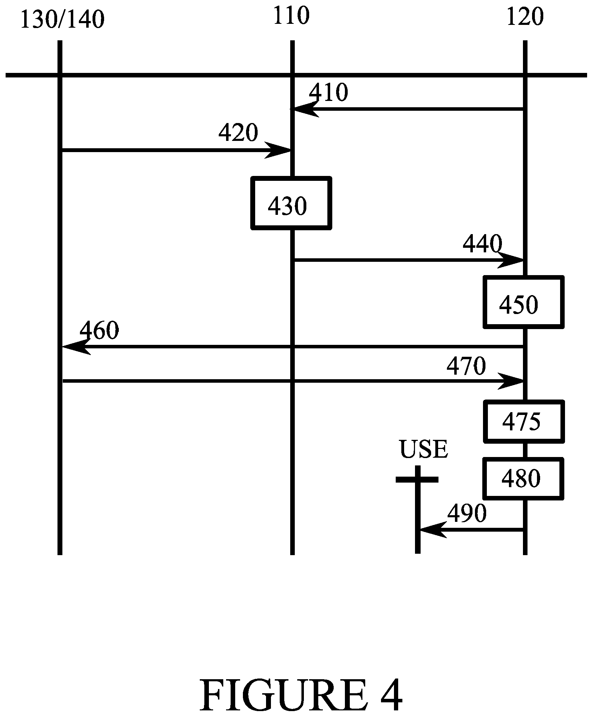

FIGURE 4 illustrates signalling in accordance with at least some embodiments of the present invention. On the vertical axes are disposed, on the left, data sources 130, 140, in the middle, verifier 110 and on the right, data user 120. Time advances from the top toward the bottom.

In phase 410, data user 120 specifies to verifier 110, which characteristic(s) data sets need to have to be useful to data user 120. Examples of such characteristics have been provided herein above. In phase 420, data source(s) 130, 140 provide one or more data set to verifier 110, which then proceeds, phase 430, to determine characteristics of the provided data set, or data sets. This determining takes place in the TEE 105 of verifier 110, and uses a first executable program, as described herein above. In phase 440, verifier 110 provides to data user 120 the cryptographic signature, according to FIGURE 2A, of a hash of the first executable program and the data set, as an indication that the data set has the characteristics communicated in phase 410. Alternatively, the cryptographic signature may be over a hash of the first executable program and a hash of the data set, or over the first executable program and the hash of the data set. Yet further, the cryptographic signature may be also, in addition to the above, over indications of characteristics of the data set, determined in phase 430. In this latest case, also the indications may be provided in phase 440.

In phase 450, data user 120 may decide whether to use the data set concerning which verifier 110 provided the signature in phase 440. More broadly, phase 450 may correspond to data user 120 deciding which data sets it is to use in the computation process it is to conduct. Phases 460 and 470 correspond to data user 120 requesting, and responsively receiving, the data set from the data source 130/140. In case verifier 110 provides the data set to data user 120 in phase 440, phases 460 and 470 may be absent. Upon reception of the data set data user 120 verifies, phase 475, the received data by calculating the hash over the data and comparing it to the hash value received with the signature in 440. The computation process may then be performed by data user 120, phase 480, using the data set as input in the computation process. Optional phase 490 corresponds to data user 120 providing a result of the computation process, such as, for example, a trained machine learning solution, to a separate user USE of the result of the computation process. Where phase 490 is absent, data user 120 may use the result of the computation process, which may comprise, as explained herein above, running an artificial neural network.

As a variant of the process illustrated in FIGURE 4, data source(s) 130/140 may request verifier 110 to determine characteristics of a data set and to provide the signature of phase 440 to data source 130/140. This also applies in case the message of phase 440 conforms to FIGURE 2B, rather than FIGURE 2A. Data source(s) 130/140 may then contact data user 120, or indeed other data users, to enable them to use the data set with confidence as to its characteristics. Data source(s) 130/140 are not able to change the signed data provider by the TEE 105 of verifier 110, wherefore providing the signed information to data source(s) 130/140 does not reduce the level of dependability of the process. Data source(s) 130/140 may be configured to use plural verifiers to determine characteristics of their data set, for example, different verifiers may have differing capabilities of determining different characteristics. It may be, that a data set has characteristics that a single verifier is not capable of determining, wherefore plural verifiers may be needed to obtain determination of all the relevant characteristics of the data set.

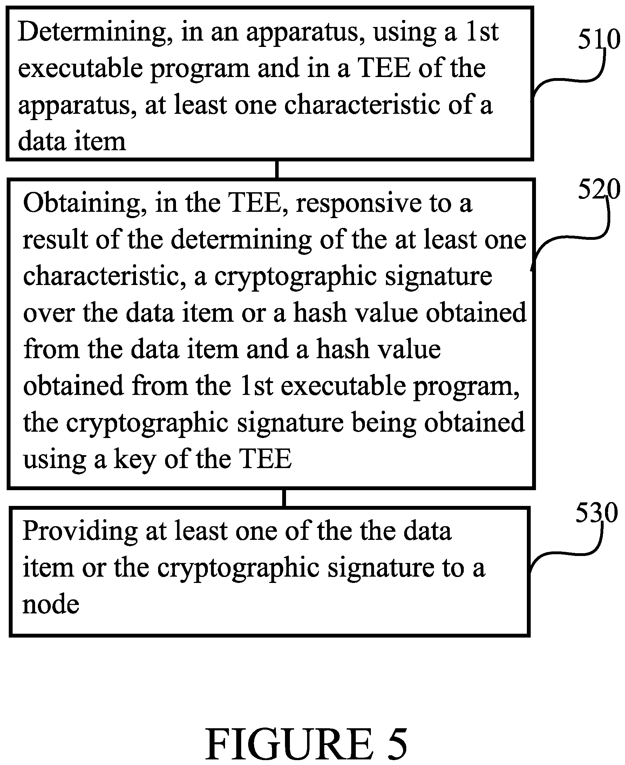

FIGURE 5 is a flow graph of a method in accordance with at least some embodiments of the present invention. The phases of the illustrated method may be performed in device 110, an auxiliary device or a personal computer, for example, or in a control device configured to control the functioning thereof, when installed therein.

Phase 510 comprises determining, in an apparatus, using a first executable program and in a trusted execution environment of the apparatus, at least one characteristic of a data item. Phase 520 comprises obtaining, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment. Finally, phase 530 comprises providing at least one of the data item or the cryptographic signature to a node.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some embodiments of the present invention find industrial application in dependable management of data, such as, for example, training data for machine learning applications.

### ACRONYMS LIST

- TEE: trusted execution environment

### REFERENCE SIGNS LIST

| | |
|---|---|
| 110 | verifier |
| 102, 106 | processing core |
| 104, 108 | memory |
| 105 | TEE |
| 130, 140 | data source |
| 120 | data user |
| 150 | network |
| 160 | trusted party |
| 210 | first executable program |
| 220 | data set |
| 215 | hash of first executable program |
| 225 | hash of first executable program |
| 230, 240 | indications of data set characteristics |
| 300-360 | structure of the device of FIGURE 3 |
| 410 - 490 | phases of the process of FIGURE 4 |
| 510 - 530 | phases of the method of FIGURE 5 |

## Claims

1. A computer-implemented method comprising:
- determining, in an apparatus, using a first executable program and in a trusted execution environment of the apparatus, at least one characteristic of a data item;
- obtaining, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and
- providing at least one of the data item or the cryptographic signature to a node.

2. The computer-implemented method according to claim 1, wherein the method comprises a memory region, wherein only a specific processing core of the trusted execution environment is configured to access the memory region.

3. The computer-implemented method according to claim 2, wherein the apparatus comprises a hardware configuration preventing processing cores other than the specific processing core of the trusted execution environment from accessing the memory region.

4. The computer-implemented method according to any of claims 1-3, further comprising providing to the node an indication of the at least one characteristic.

5. The computer-implemented method according to any of claims 1-4, wherein the at least one characteristic comprises that the data item comprises image, numerical or video data of a first type.

6. The computer-implemented method according to any of claims 1 - 5, wherein the determination of the at least one characteristic comprises using, in the first executable program, a machine learning solution to classify the data item.

7. A computer-implemented method, comprising:
- receiving a data item and a cryptographic signature;
- verifying the cryptographic signature using a public key of a trusted execution environment of a node, and
- responsive to the verification of the cryptographic signature being successful, using the data item in a process in the apparatus, and responsive to the verification of the cryptographic signature being unsuccessful, not using the data item in the process.

8. The computer-implemented method according to claim 7, wherein the process is a training process of a machine learning solution.

9. The computer-implemented method according to claim 8, further configured to run the machine learning solution after the training process has been run.

10. The computer-implemented method according to claim 9, wherein the machine learning solution is comprised in the following list: a trash item classification process, a pedestrian recognition process and an autonomous vehicle navigation process.

11. The computer-implemented method according to any of claims 7 - 10, further configured to receive from the node an indication of at least one characteristic of the data item.

12. An apparatus comprising means for performing a method according to either one of claims 1 - 6, or one of claims 7-11.

13. An apparatus comprising means for:
- determining, in an apparatus, using a first executable program and in a trusted execution environment of the apparatus, at least one characteristic of a data item;
- obtaining, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and
- providing at least one of the data item or the cryptographic signature to a node.

14. An apparatus comprising means for:
- receiving a data item and a cryptographic signature from a node;
- verifying the cryptographic signature using a public key of a trusted execution environment of the node, and
- responsive to the verification of the cryptographic signature being successful, using the data item in a process in the apparatus, and responsive to the verification of the cryptographic signature being unsuccessful, not using the data item in the process.

15. A non-transitory computer readable medium having stored thereon a set of computer readable instructions that, when executed by at least one processor, cause an apparatus to at least:
- determine, using a first executable program and in a trusted execution environment of the apparatus, at least one characteristic of a data item;
- obtain, in the trusted execution environment, responsive to a result of the determining of the at least one characteristic, a cryptographic signature over the data item or a hash value obtained from the data item and a hash value obtained from the first executable program, the cryptographic signature being obtained using a key of the trusted execution environment, and
- provide at least one of the data item or the cryptographic signature to a node.
